# EUROPEAN PATENT SPECIFICATION

(11) **EP 0 710 191 B1**
(45) Date of publication and mention of the grant of the patent: **20.01.1999**
(21) Application number: 94917171.4
(22) Date of filing: 25.05.1994
(51) Int. Cl.: F16H 3/66

(54) **POWER TRAIN OF FIVE-SPEED AUTOMATIC TRANSMISSION FOR VEHICLE**
ANTRIEBSSTRANG FÜR FAHRZEUG MIT FÜNF-GANG-AUTOMATIKGETRIEBE
TRANSMISSION AUTOMATIQUE A CINQ VITESSES POUR VEHICULES

(43) Date of publication of application: 08.05.1996
(73) Proprietor: HYUNDAI MOTOR COMPANY, Jongro-ku, Seoul 110-270 (KR)
(72) Inventor: PARK, Seong Hyon, Yongin-kun, Kyungki-do 449-910 (KR); KIM, Jin Seong, Yongin-kun, Kyungki-do 449-910 (KR); PARK, Dong Hoon, Yongin-kun, Kyungki-do 449-910 (KR)
(74) Representative: Urner, Peter, Dipl.-Phys.
(86) International application number: KR9400057
(87) International publication number: WO9532101

(56) References cited:
- EP-A- 0 565 111
- US-A- 4 833 943
- US-A- 4 916 977
- US-A- 4 942 785
- US-A- 5 073 156

## Description

### BACKGROUND OF THE INVENTION

### Field of the Invention

The present invention relates to a power train for a five-speed automatic transmission of a vehicle, and more particularly, to a power train which can output five forward speed ratios and one reverse ratio.

### Description of the Related Art

In general, an automatic transmission comprises a planetary gear unit which is connected between a torque converter and a driven shaft.

The planetary gear unit includes a sun gear, a plurality of planet gears, a carrier mounting the planet gears to each other, and a ring gear.

Various clutches and brakes, and friction elements are utilized to selectively operate the gears of the planetary gear unit as reacting force elements or input elements to produce the desired speed ratios.

In a high-powered engine, failing to fully utilize a performance of the engine, the automatic transmission is deteriorated in its fuel consumption ratio, power capability, and driving capability.

Accordingly, in order to fully utilize the performance of the engine, multiple transmission speed ratios have been considered. The transmission having the multiple speed ratios requires that each speed ratio should be easily controlled. Easy control of the speed ratios means that when changing a speed from one speed ratio to another speed ratio, only one of the friction elements is controlled to realize the change of speed ratio.

U.S. Patent No. 5,112,285 discloses a transmission having multiple transmission speed ratios. However, in this patent, when changing the speed from one speed ratio to another speed ratio, since a friction element which is in an engaged state should be released and another friction element should be engaged, controlling the speed ratio is complicated.

U. S. Patent No. 4,833,943 discloses a power train for an automatic transmission of a motor vehicle according to the preamble of claim 1.

In particular, this known power train comprises a main transmission mechanism including a compound planetary gear unit with two sun gears selectively coupable with a turbine driven input shaft and an engine driven input shaft, and a common ring gear for transmitting power to a pinion gear of a sub-transmission mechanism the sun gear of which is used a reacting element whereas the ring gear thereof serves as an output element.

U. S. Patent No. 5,073,156 discloses another a power train including a compound planetary gear set the first sun gear of which can be selectively coupled to a turbine shaft by means of a forward clutch. In addition, the first or forward sun gear can be selectively coupled to a pinion carrier by means of a one-way clutch and a clutch arranged in series therewith. The latter clutch couples the pinion carrier directly to a direct drive shaft which is connected to an output shaft of an engine.

### SUMMARY OF THE INVENTION

It is an object of the present invention to provide a power train for an automatic transmission of vehicle which can easily accomplish a transmission control completely utilising the performance of an engine.

To accomplish this object the present invention provides a power train according to claim 1.

### BRIEF DESCRIPTION OF THE DRAWINGS

Further objects and other advantages of the invention will become apparent from the following description in conjunction with the attached drawings, in which:
FIG. 1 is a schematic diagram showing a power train of an automatic transmission according to a first embodiment of the present invention;
FIG. 2 is a table illustrating an operating sequence of friction elements at each speed ratio of the power train FIG. 1;
FIG. 3 is a schematic diagram showing a power train of an automatic transmission according to a second embodiment of the present invention; and
FIG. 4 is a table illustrating an operating sequence of friction elements at each speed ratio of the power train in FIG. 3.

### DETAILED DESCRIPTION OF THE PREFERRED EMBODIMENT

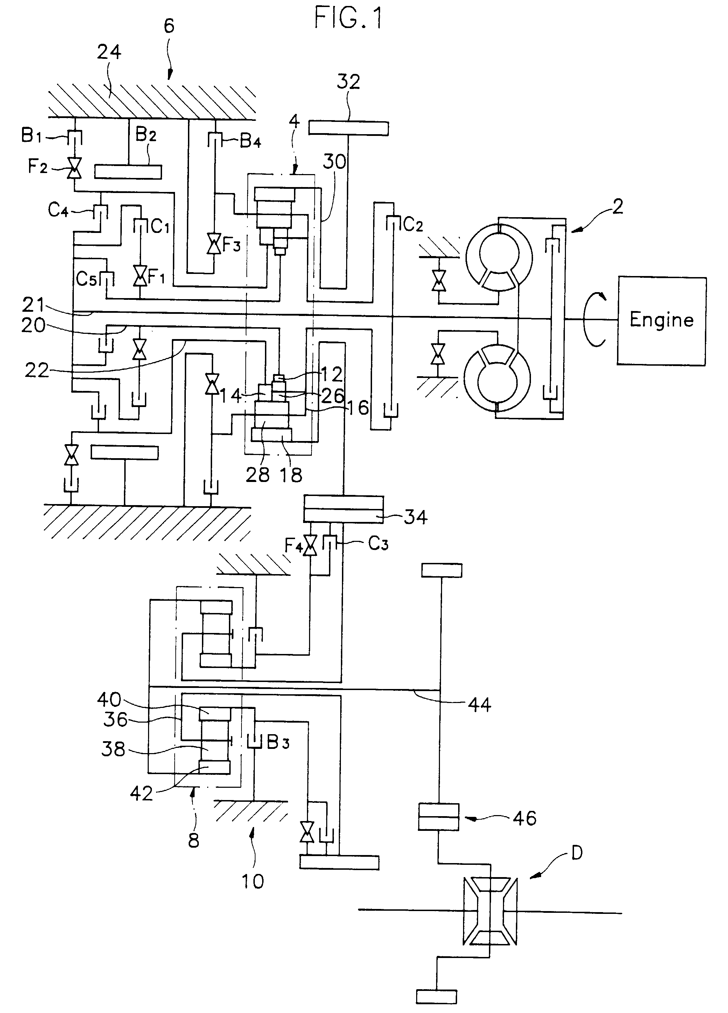

Referring to FIG. 1, a power train connected between an engine(not shown) and a torque converter 2 includes a main-transmission mechanism 6 having a compound planetary gear unit 4 and a sub-transmission mechanism 10 having a simple planetary gear unit 8.

The power train has a structure which is suitable for a front drive vehicle, in which the compound planetary gear unit 4 includes first and second sun gears 12 and 14 and a planet carrier 16, all of which work as an input element, and a ring gear 18 which works as an output element.

The first sun gear 12 is designed to selectively receive a power from an input axle 21 through a first power transmitting member 20. This operation is enabled by use of a first friction element C1.

A first one-way clutch F1 is mounted between the first friction element C1 and the first power transmitting member 20, being designed to transmit the power in a clockwise direction when viewed from the engine side.

A second power transmitting member 22 formed with a hollow configuration is mounted on an outer circumference of the first power transmitting member 20. The first and second power transmitting members 20 and 22 are able to independently rotate with each other. The rotation of the second power transmitting member 22 is selectively suppressed by a second friction element B1 mounted on a transmission case 24.

A second one-way clutch F2 having the same structure as that of the first one-way clutch F1 is mounted between the second friction element B1 and the second power transmitting member 22 so that when the second friction element B1 is engaged, the second sun gear 14 becomes the reacting force element.

The planet carrier 16 of the compound planetary gear unit 4 is designed not to rotate in a counter-clock wise direction when viewed from the engine side by a third one-way clutch F3 mounted on the transmission case 24.

A third friction element C2 which is to be selectively engaged is mounted between the planet carrier 16 and the input axle 21, such that the first sun gear 12 and the plane carrier 16 simultaneously work as input elements of the compound planetary gear unit 4.

A fourth friction element B2 suppressing a rotation of the second power transmitting member 22 in any direction is mounted on the transmission case 24 so as to fix the second sun gear 14 as the reacting force element, such that a speed ratio of an over drive, that the number of rotation transmitted to the ring gear 18 is larger than that of the input, can be output.

This is realized by mounting first and second pinion gears 26 and 28 on the planet carrier 16 of the compound gear unit 4 and meshing the first and second pinion gears 26 and 28 with the first and second sun gears 12 and 14, respectively.

Further, the second pinion gear 28 is meshed with inner circumference of the ring gear 18, rotating in the same direction as the ring gear.

The main-transmission mechanism 6 as described above can produce four forward speed ratios, and additionally the sub-transmission mechanism 10 can produce one forward speed ratio which has a smaller speed ratio than that of the over drive when the over drive speed ratio is realized in the compound planetary gear unit 4, whereby five forward speed ratios can be established.

That is, the ring gear 18 is integrally formed with an output drum member 30 and a transfer drive gear 32 is mounted on the output drum member 30, transmitting the power to a transfer driven gear 34 of the sub-transmission mechanism.

The transfer driven gear 34 is directly connected to a planet carrier 36 of the simple planetary gear unit 8 such that the planet carrier 36 can work as the input element. A third pinion gear 38 is mounted on the planet carrier 36 and is meshed with an outer circumference of a third sun gear 40. The third sun gear 40 is designed to work as a reacting force element by a fifth friction element B3 mounted on the transmission case 24.

Further, the ring gear 42 having an inner circumference meshed with the third pinion 38 is directly connected with an output shaft 44, transmitting the final reduction speed ratio to the differential gear D through a final reduction speed means 46.

The sub-transmission mechanism 10 further includes a fourth one-way clutch F4 mounted between the third sun gear 40 and the transfer driven gear 34. The fourth one-way clutch F4 is designed to suppress a free wheeling of the third sun gear 40 in a counter-clockwise direction when viewed from the engine side.

Further, while the power train changes the speed ratio within first through fourth forward speed ratios, the simple planetary gear of the sub-transmission mechanism should not change the speed ratio so that input and output becomes the same as each other. To realize this purpose, a sixth friction element C3 is mounted between the transfer driven gear 34 and the third sun gear 40.

On the other hand, the main-transmission mechanism 6 is designed to have a certain speed ratio for reversing the vehicle, in which a seventh friction element C4 is mounted between the input axle 21 and the second power transmitting member 22 and an eighth friction element B4 for fixing the planet carrier 16 as the reacting force element is mounted on the transmission case 24.

Further, a ninth friction element C5 is mounted between the input axle 21 and the first power transmitting member 20.

The friction elements having reference character "B" means a wet multiple-disc brake or a band brake and the friction elements having reference character "C" means a wet multiple-disc clutch, wherein the brakes are used for providing reacting force elements and the clutches are used for providing input elements. The rotation direction, clockwise or counter-clockwise, which will be stated hereinafter is when viewed from the engine side.

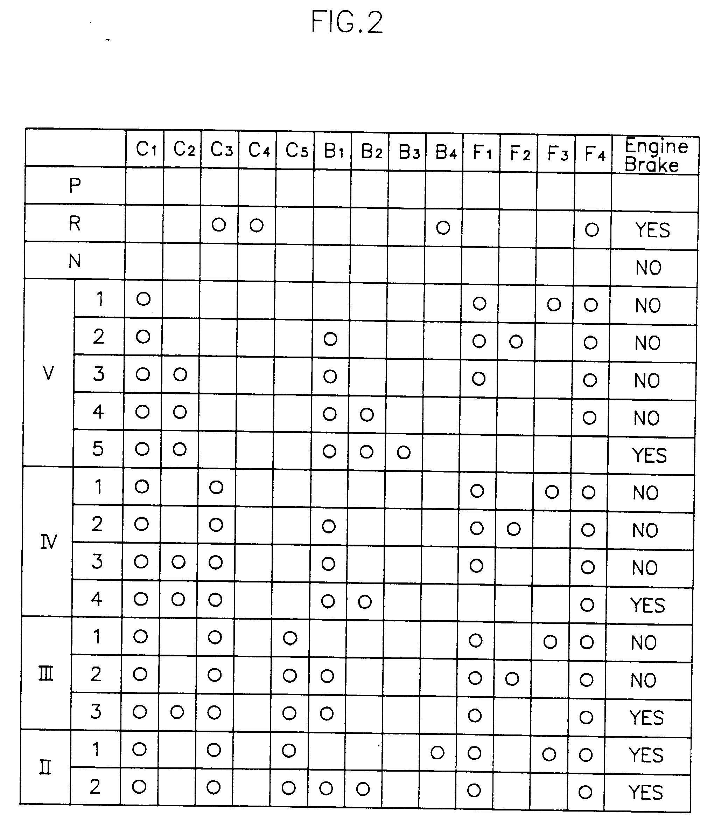

The power train showing in FIG. 1 according to the first embodiment of the present invention produces the five forward speed ratios and one reverse speed ratio in accordance with an operation of a table of FIG. 2.

### [ FIRST FORWARD RATIO ]

When a shift lever is selected to a drive range V, the transmission control unit TCU(not shown) is designed to engage only the friction element C1.

Accordingly, the power of the engine transmitted to the input axle through the torque converter 2 is transmitted to the first power transmitting member 20 and then transmitted to the first sun gear 12 of the compound planetary gear unit 4.

During this operation, since the first one-way clutch F1 mounted between the first friction element C1 and the first power transmitting member 20 has a structure which is transmitting the power in the clockwise direction, the power to be transmitted to the first sun gear 12 is transmitted through the first one-way clutch F1.

That is, the first sun gear 12 becomes the input element, in which since the rotation in the counter-clockwise direction of the planet carrier 16 is suppressed by the third one-way clutch F3, the planet carrier 16 acts as the reacting force element such that the rotation power in the clockwise direction rotates the first pinion gear 26 in the counter-clockwise direction while rotating the second pinion gear 28 in the clockwise direction.

Accordingly, the ring gear 18 meshed with the second pinion gear 28 in its inner circumference rotates in the clockwise direction, thereby transmitting the first forward speed ratio to the output drum member 30.

The first forward speed ratio is transmitted to the transfer driven gear 34 through the transfer drive gear 32, thereby rotating the driven gear 34 in the counter-clockwise direction.

The rotation in the counter-clockwise direction is transmitted to the third pinion gear 38 through the planet carrier 36 of the sub-transmission mechanism 10, thereby rotating the third ring gear 42 with the same number of rotations.

That is, the speed ratio of the main-transmission mechanism 10 is directly transmitted to the final reduction speed member 46 to obtain a final reduction speed without increasing or reducing the speed in the sub-transmission mechanism 10, such that the final speed reduction is transmitted to the differential gear D to drive the vehicle with the first forward speed ratio.

At this point, although the third sun gear 40 of the sub-transmission mechanism 10 tends to rotate in a faster speed, the third sun gear can not rotate faster than the transfer driven gear 34 by the fourth one-way clutch F4.

In this speed reduction operation, the engine brake that the power is reversely transmitted from the wheel to the engine does not occur. At this point, the first, third, and fourth one-way clutches F1, F3 and F4 are to be in an engagement state and the second one-way clutch F2 is to be in disengagement state.

### [ SECOND FORWARD RATIO ]

When the vehicle speed is increased in the first forward speed ratio state, another friction element is designed to be engaged in addition to the first friction element C1 to output the second forward speed ratio by the transmission control unit TCU.

That is, the second friction element B1 is additionally engaged such that the first sun gear 12 becomes the input element of the compound planetary gear unit 4 of the main-transmission mechanism 6, while the second sun gear 14 becomes the reacting force element since the second one-way clutch F2 suppresses the rotation of the second sun gear 14 in a counter-clockwise direction by the engagement to the second friction element B1.

Accordingly, although the power transmitting path is the same as that of the first speed ratio, since the second pinion gear 28 is to revolve a round the second sun gear 14, the ring gear rotate fast by the number of rotations of the revolution, thereby establishing the second forward speed ratio.

The second forward speed ratio is transmitted to the differential gear D through the sub-transmission mechanism 10 in the same manner as the first forward speed ratio, at this point, since the sub-transmission mechanism 10 does not work for the speed increasing or reducing operation, the vehicle is driven with the speed reduction ratio of the main-transmission mechanism 6. At this point, the third second and fourth one-way clutches F1, F2 and F4 are to be in an engagement state.

### [ THIRD FORWARD RATIO ]

When the vehicle speed is increased in the second forward speed ratio state and an opening range of a throttle valve is increased, another friction element in addition to the first and second friction elements C1 and B1 is further engaged by the transmission control unit TCU.

That is, the third friction element C2 is additionally engaged such that the first sun gear 12 and the planet carrier 16 become simultaneously the input element of the compound planetary gear unit 4 of the main-transmission mechanism 6.

Accordingly, since both the first and second sun gears 12 and 14 rotate in the clockwise direction and the first and second pinion gears 26 and 28 come into a locking state, the planetary gear unit 4 bodily rotates such that the number of rotations of the output becomes the same as that of the input.

This produces the third forward speed ratio larger than the second forward speed ratio, and the third forward speed ratio is transmitted to the sub-transmission mechanism to drive the vehicle through the differential gear D. At this point, the first and fourth one-way clutches F1 and F4 are to be in an engagement state, and the second and third one-way clutches are to be in a disengagement state.

### [ FOURTH FORWARD RATIO ]

When the vehicle speed is increased in the third forward speed ratio state, another friction element in addition to the first, second, and third friction elements C1, B1, and C2 is further engaged by the transmission control unit.

That is, the fourth friction element B2 is additionally engaged, in which the second sun gear 14 which rotates in the same direction as that of the first sun gear in the third forward speed ratio state is fixed as the reacting force element, such that the second pinion gear 28 revolves a round the second sun gear 14 in the same speed as that of the planet carrier 16.

Accordingly, the ring gear 18 transmits the number of rotation to which the number of the rotation and revolution of the second pinion gear 28 is added, that is, the fourth forward speed ratio, to the transfer drive gear 32.

The fourth forward speed ratio is directly transmitted to the differential gear D since no friction element of the sub-transmission mechanism is engaged. At this point, the fourth one-way clutch F4 is to be in engagement state, and the first, second and third one-way clutches F1, F2 and F3 are to be in a disengagement state.

### [ FIFTH FORWARD RATIO ]

When the vehicle speed is increased in the fourth forward speed ratio state, the fifth friction element B3 of the sub-transmission mechanism 10 in addition to the first, second, third, and fourth friction elements C1, B1, C2, and B2 is additionally engaged by the transmission control unit TCU.

Accordingly, when the fourth forward speed ratio is transmitted from the main-transmission mechanism to the sub-transmission mechanism, since the fifth friction element B3 is engaged so that the third sun gear becomes the reacting force element and the third pinion gear 38 revolves a round the third sun gear 40, the increased number of rotation is transmitted to the third ring gear 42.

That is, the fifth forward speed ratio is produced, in which the engine brake which the power is reversely transmitted from the wheel to the engine is operated. At this point, all the one-way clutches F1, F2, F3 and F4 are to be in a disengagement state.

### [ REVERSE RATIO ]

When the shift lever is selected to the "R" range, the seventh and eighth elements C4 and B4 of the main-transmission mechanism 6 and the sixth friction element C3 of the sub-transmission mechanism 10 are engaged by the transmission control unit TCU.

As a result, the rotation power of the input axle 21 is transmitted to the second sun gear 14 through the seventh friction element C4, rotating the second pinion gear 28 in the counter-clockwise direction. At this point, since the eighth friction element B4 is engaged, the planet carrier 16 becomes the reacting force element and the ring gear 18 rotates in the same direction as that of the second pinion gear 28, outputting the reverse speed ratio to the transfer drive gear 32.

The reverse speed ratio is transmitted to the planet carrier 36 of the sub-transmission mechanism through the transfer driven gear 34. At this point, since the sixth friction element is engaged, the simple planetary gear unit 8 is designed to have two input elements such that the number of rotation of the output becomes the same as that of the output.

In this reverse speed ratio, since the seventh friction element C4 is engaged, the engine brake is operated during coasting.

As described above, the present invention is designed to render the engine brake inoperable in the first through fourth forward speed ratios during coasting. However, if necessary, the present invention is designed to be able to operate the engine brake in each fourth, third, second and first forward speed ratio.

That is, at the fourth forward speed ratio in drive range IV, the engine brake is operated during coasting, while the engine brake is not operated at the fourth forward speed ratio in the drive rang V.

Namely, as shown in the table of FIG. 2, at the fourth forward speed ratio in drive range IV, since the sixth friction element C3 of the sub-transmission mechanism 10 is to be engaged, the free wheeling of the fourth one-way clutch F4 is suppressed during coasting mode in which the power is transmitted from the wheel to the engine, whereby the engine brake is operated.

When the shift lever is set on drive range III, as shown in the table of FIG. 2, the ninth friction element C5 of the main-transmission mechanism 6 is designed to be engaged such that the power is transmitted from the wheel to the engine, whereby engine brake is operated when the vehicle is coasting.

When the shift lever is set on drive range II, as shown in the table of FIG. 2, the engine brake is designed to be operated at the first and second forward speed ratios by engaging the eighth friction element B4 to fix the planet carrier 16 in the first forward speed ratio and by engaging the fourth friction element B2 to fix the second sun gear 14 in the second forward speed ratio.

As described above, the power train according to the first embodiment of the present invention has an advantage of easily controlling a speed ratio change by simply engaging the friction element one by one at each speed ratio during up-shift and disengaging the friction element one by one at each speed ratio during downshift, and has another advantage that, if necessary, the engage brake can be operated in each range.

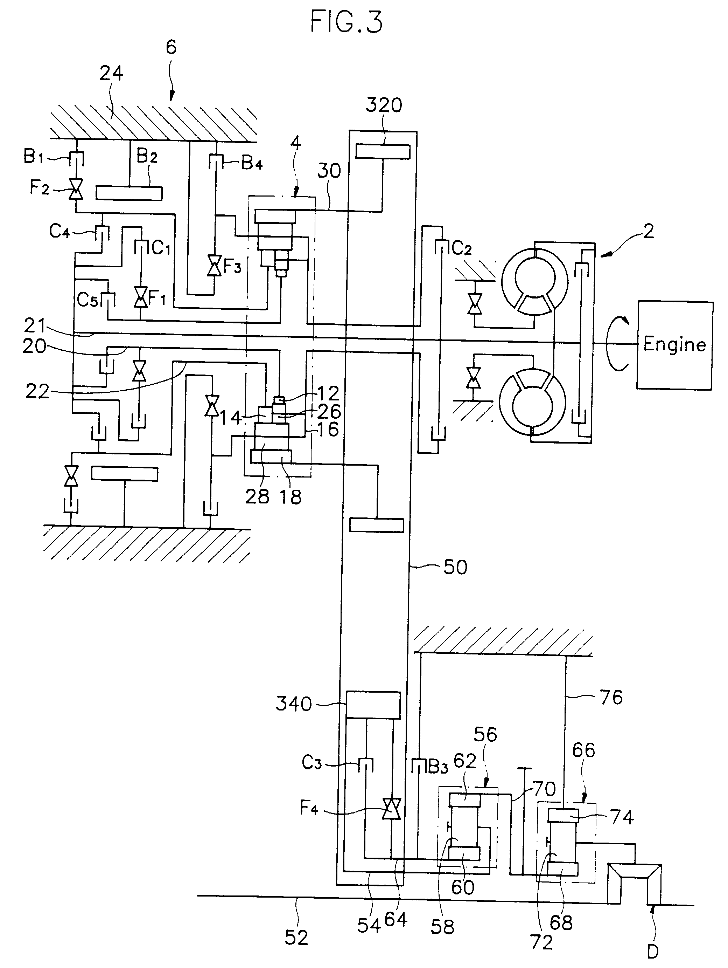

FIG. 3 shows a power train of the automatic transmission in accordance with a second embodiment of the present invention, in which a main-transmission mechanism 6 has a same constitution as that of the first embodiment, while the sub-transmission mechanism 10 is constituted with two simple planetary gear units. Further, the power is transmitted by a chain interconnecting the main-transmission mechanism and the sub-transmission mechanism.

Accordingly, a transfer drive sprocket 320 integrally formed with the ring gear of the main-transmission mechanism 6 through the output drum member 30 is connected with a transfer driven sprocket 340 of the sub-transmission mechanism 10 by the chain 50.

Since the sub-transmission mechanism is symmetrical on the basis of an output shaft 52, only the half section is illustrated in FIG. 3.

The transfer driven sprocket 340 integrally mounted on a planet carrier 54 is connected to a pinion gear 58 of a first simple planetary gear unit 56, and a pinion gear 58 is meshed with an outer circumference of the sun gear 60 and meshed with an inner circumference of the ring gear 62.

The sun gear 6 is designed to transmit the power to a power transmitting member 64 through the sixth friction element C3 mounted between the sun gear 60 and the transfer driven sprocket 340, and a fourth one-way clutch F4 is mounted between the power transmitting member 64 and the transfer driven gear 340 such that the power is transmitted in the counter-clockwise direction.

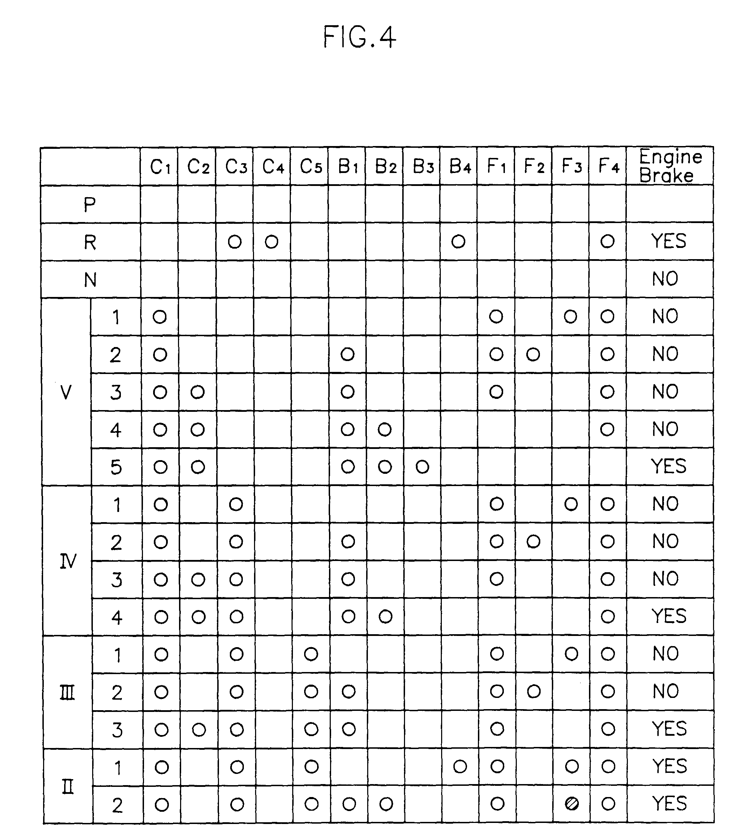

The power train as described above changes the speed ratio by selectively engaging the friction elements, as shown in the table of FIG. 4.

The operation of the speed ratio change according to the second embodiment is the same as that of first embodiment as shown in FIGS. 1 and 2, except that the sun gear 68 of the second simple planetary gear unit 66 acts as the input element, the ring gear 74 acts as the reacting force element and the pinion gear 72 acts as the output element for the operation of the final reduction speed.

## Claims

1. A power train for an automatic transmission of a vehicle, comprising:
- an input axle (21) for delivering power from an engine; and
- a main-transmission mechanism (6) having a compound planetary gear unit (4) for outputting the power as four speed ratios to a sub-transmission mechanism (10) having a simple planetary gear unit (8) for increasing a speed ratio which is output from the main transmission mechanism (6) as largest speed ratio of the four speed ratios;
- the main-transmission mechanism (6) including
-- a first friction element (C1) for selectively transmitting the power in a forward drive ratio from the input axle (21) to a first sun gear (12) of the compound planetary gear unit (4),
-- a second friction element (B1) for making a second sun gear (14) of the compound planetary gear unit (4) as an idling element,
-- a third friction element (C2) for selectively transmitting the power from an input axle to planet carrier (16) of the compound planetary gear unit (4),
-- a fourth friction element (B2) for operating the second sun gear (14) as a reacting force element and
-- a ring gear (18) provided as an output of the compound planetary gear unit (4); and
- the sub-transmission mechanism (10) including a fifth friction element (B3) for operating a third sun gear (40) of the simple planetary gear unit (8) as a reacting force element:
**characterized in** that a first one-way clutch (F1) is mounted between the first friction element (C1) and the first sun gear (12) of the compound planetary gear unit (4) to transmit the power from the engine in a clockwise direction when viewed from the engine, so that the first friction element (C1) is applied in all forward drive ratios.

2. A power train according to claim 1, **characterized in** that the second sun gear (14) of the compound planetary gear unit (4) is connected to the second friction element (B1) by a second one-way clutch (F2) which is capable of free wheeling in the clock in the clockwise direction.

3. A power train according to claim 1 or 2, **characterized in** that the sub-transmission mechanism (10) further includes a fourth one-way clutch (4) which is mounted between the third sun gear (40) and a transfer driven gear (34) to prevent the third sun gear (40) of the simple planetary gear unit (8) from rotating faster than the third pinion gear (38).

4. A power train according to claim 3, **characterized in** that the fourth one-way clutch (F4) is suppressed in its rotation in a counter-clockwise direction when viewed from the engine.

5. A power train according to any one of the claims 1 to 4, **characterized in** that the main transmission mechanism (6) and the sub-transmission mechanism (10) further include a transfer drive gear (32) and a transfer driven gear (34), respectively, the drive and driven gears (32, 34) being meshed with each other to transmit the power.

6. A power train according to any one of the claims 1 to 4, **characterized in** that the main transmission mechanism (6) and the sub-transmission mechanism (10) further include a transfer drive sprocket (320) and a transfer driven sprocket (340), respectively, the drive and driven sprockets (320, 340) being meshed with each other by means of a chain (50) to transmit the power.

7. A power train according to claim 6, **characterized in** that the simple planetary gear unit (56) of the sub-transmission mechanism includes a pinion gear (58) directly connected to the transfer driven sprocket (340), a sun gear (60) meshed with the pinion gear (58) to receive the power in a state that a sixth friction element (C3) is engaged, and a ring gear (62) ; and in that the sub-transmission mechanism further comprises a second simple planetary gear unit (66) including a sun gear (68) directly connected to the ring gear (62) of the first planetary gear unit (56), a pinion gear (72) meshed with the sun gear (68) to transmit the power to a differential gear (D), and a ring gear (74).

## Patentansprüche

1. Antriebsstrang für ein Automatikgetriebe eines Fahrzeugs, mit:
- einer Eingangswelle (21) zum Liefern einer Leistung von einem Motor; und
- einem Hauptgetriebe (6), das eine zusammengesetzte Planetengetriebeeinheit (4) zum Ausgeben der Leistung mit vier Übersetzungsverhältnissen zu einem Hilfsgetriebe (10) aufweist, das eine einfache Planetengetriebeeinheit (8) zum Erhöhen eines Übersetzungsverhältnisses umfaßt, das von dem Hauptgetriebe (6) als größtes Übersetzungsverhältnis der vier Übersetzungsverhältnisse ausgegeben wird;
- das Hauptgetriebe (6) umfaßt
-- ein erstes Reibungselement (C1) zum wahlweisen Übertragen der Leistung in einem Vorwärtsfahrverhältnis von der Eingangswelle (21) zu einem ersten Sonnenrad (12) der zusammengesetzten Planetengetriebeeinheit (4),
-- ein zweites Reibungselement (B1), das ein zweites Sonnenrad (14) der zusammengesetzten Planetengetriebeeinheit (4) zu einem Leerlaufelement macht,
-- ein drittes Reibungselement (C2) zum wahlweisen Übertragen der Leistung von einer Eingangswelle zu einem Planetenträger (16) der zusammengesetzten Planetengetriebeeinheit (4),
-- ein viertes Reibungselement (B2) zum Betreiben des zweiten Sonnenrads (14) als Reaktionselement und
-- ein Hohlrad (18), das als Ausgang der zusammengesetzten Planetengetriebeeinheit (4) vorgesehen ist; und
- das Hilfsgetriebe (10) umfaßt ein fünftes Reibungselement (B3) zum Betreiben eines dritten Sonnenrads (40) der einfachen Planetengetriebeeinheit (8) als Reaktionselement;
**dadurch gekennzeichnet,** daß eine erste Einwegkupplung (F1) zwischen das erste Reibungselement (C1) und das erste Sonnenrad (12) der zusammengesetzten Planetengetriebeeinheit (4) montiert ist, um die Leistung vom Motor vom Motor aus gesehen im Uhrzeigersinn zu übertragen, so daß das erste Reibungselement (C1) in allen vier Vorwärtsfahrverhältnissen angelegt ist.

2. Antriebsstrang nach Anspruch 1, **dadurch gekennzeichnet,** daß das zweite Sonnenrad (14) der zusammengesetzten Planetengetriebeeinheit (4) mit dem zweiten Reibungselement (B2) durch eine zweite Einwegkupplung (F2) verbunden ist, die im Uhrzeigersinn frei läuft.

3. Antriebsstrang nach Anspruch 1 oder 2, **dadurch gekennzeichnet,** daß das Hilfsgetriebe (10) ferner eine vierte Einwegkupplung (4) umfaßt, die zwischen dem dritten Sonnenrad (40) und einem getriebenen Übertragungsrad (34) montiert ist, um zu verhindern, daß das dritte Sonnenrad (40) der einfachen Planetengetriebeeinheit (8) schneller dreht als die dritten Planetenräder (38).

4. Antriebsstrang nach Anspruch 3, **dadurch gekennzeichnet,** daß die vierte Einwegkupplung (F4) vom Motor aus gesehen an einer Drehung im Gegenuhrzeigersinn gehindert ist.

5. Antriebsstrang nach Anspruch 1 bis 4, **dadurch gekennzeichnet,** daß das Hauptgetriebe (6) und das Hilfsgetriebe (10) ein antreibendes Übertragungsgetrieberad (32) bzw. ein angetriebenes Übertragungsgetrieberad (34) umfassen, die miteinander kämmen, um die Leistung zu übertragen.

6. Antriebsstrang nach Anspruch 1 bis 4, **dadurch gekennzeichnet,** daß das Hauptgetriebe (6) und das Hilfsgetriebe (10) ein antreibendes Übertragungskettenrad (320) bzw. ein angetriebenes Übertragungskettenrad (340) umfassen, die über eine Kette (50) miteinander in Eingriff stehen, um Leistung zu übertragen.

7. Antriebsstrang nach Anspruch 6, **dadurch gekennzeichnet,** daß die einfache Planetengetriebeeinheit (56) des Hilfsgetriebes Planetenräder (58), die direkt mit dem angetriebenen Übertragungskettenrad (340) verbunden sind, ein Sonnenrad (60), das mit den Planetenrädern (58) kämmt, um die Leistung in einem Zustand zu empfangen, in dem ein sechstes Reibungselement (C3) in Eingriff ist, und ein Hohlrad (62) umfaßt; und daß das Hilfsgetriebe ferner eine zweite einfache Planetengetriebeeinheit (66) mit einem direkt mit dem Hohlrad (62) der ersten Planetengetriebeeinheit (56) verbundenem Sonnenrad (68), Planetenrädern (72), die mit dem Sonnenrad (68) kämmen, um die Leistung zu einem Differentialgetriebe (D) zu übertragen, und ein Hohlrad (74) aufweist.

## Revendications

1. Transmission automatique pour véhicule, comprenant :
- un axe d'entrée (21) pour fournir de la puissance délivré par un moteur ; et
- un mécanisme de transmission principal (6) comportant une unité d'engrenages épicycloïdaux combinés (4) pour fournir en sortie de la puissance sous forme de rapports de vitesse à un mécanisme de transmission secondaire (10) comportant une unité d'engrenage épicycloïdal simple (8) pour augmenter un rapport de vitesse qui est fourni en sortie du mécanisme de transmission principal (6) en tant que rapport de vitesse le plus grand des quatre rapports de vitesse ;
- le mécanisme de transmission principal incluant
-- un premier élément de friction (C1) pour transmettre sélectivement la puissance dans un rapport d'entraînement avant fournie par l'axe d'entrée (21) à un premier pignon planétaire (12) de l'unité d'engrenages épicycloïdaux combinés (4),
-- un deuxième élément de friction (B1) pour commander un deuxième pignon planétaire (14) de l'unité d'engrenages épicycloïdaux combinés (4) comme élément libre,
-- un troisième élément de friction (C2) pour transmettre sélectivement de la puissance délivrée par un axe d'entrée a un porte-satellites (16) de l'unité d'engrenages épicycloïdaux combinés (4),
-- un quatrième élément de friction (B2) pour actionner le second pignon planétaire (14) comme élément de force de réaction et
-- une couronne dentée (18) fournie comme sortie de l'unité d'engrenages épicycloïdaux (4) ; et
- le mécanisme de transmission secondaire (10) incluant un cinquième élément de friction (B3) pour actionner un troisième pignon planétaire (40) de l'unité d'engrenage épicycloïdal simple (8) comme élément de force de réaction ;
caractérisée en ce qu'un embrayage unidirectionnel (F1) est monté entre le premier élément de friction (C1) et le premier pignon planétaire (12) de l'unité d'engrenages épicycloïdaux combinés (4) pour transmettre la puissance fournie par le moteur dans le sens horaire par rapport au moteur, de telle sorte que le premier élément de friction (C1) est appliqué dans tous les rapports d'entraînement avant.

2. Transmission selon la revendication 1, caractérisée en ce que le deuxième pignon planétaire (14) de l'unité d'engrenages épicycloïdaux combinés (4) est raccordé au deuxième élément de friction (B1) par un deuxième embrayage unidirectionnel (F2) qui est apte à tourner en roue libre dans le sens horaire.

3. Transmission selon la revendication 1 ou 2, caractérisé en ce que le mécanisme de transmission secondaire (10) inclut en outre un quatrième embrayage unidirectionnel (F4) qui est monté entre le troisième pignon planétaire (40) et une roue dentée de transfert menée (34) pour empêcher le troisième pignon planétaire (40) de l'unité d'engrenage épicycloïdal simple (8) de tourner plus rapidement que le troisième pignon (38).

4. Transmission selon la revendication 3, caractérisée en ce que la rotation du quatrième embrayage unidirectionnel (F4), dans le sens antihoraire par rapport au moteur, est arrêtée.

5. Transmission selon l'une quelconque des revendications 1 à 4, caractérisée en ce le mécanisme de transmission principal (6) et le mécanisme de transmission secondaire (10) comprend en outre une roue dentée de transfert menante (32) et une roue dentée de transfert menée (34), respectivement, les roues menante et menée (32, 34) étant en prise l'une avec l'autre pour transmettre de la puissance.

6. Transmission selon l'une quelconque des revendications 1 à 4, caractérisée en ce que le mécanisme de transmission principal (6) et le mécanisme de transmission secondaire (10) incluent en outre un pignon de chaîne de transfert menant (320) et un pignon de chaîne de transfert mené (340), respectivement, les pignons de chaîne de transfert menant et mené (320, 340) étant en prise l'un avec l'autre au moyen d'une chaîne (50) pour transmettre de la puissance.

7. Transmission selon la revendication 6, caractérisée en ce que l'unité d'engrenage épicycloïdal simple (56) du mécanisme de transmission secondaire inclut un pignon (58) directement raccordé au pignon de chaîne de transfert mené (340), un pignon planétaire (60) en prise avec le pignon (58) pour recevoir de la puissance dans un état dans lequel un sixième élément de friction (C3) est engagé, et une couronne dentée (62) ; et en ce que le mécanisme de transmission secondaire comprend en outre une seconde unité d'engrenage épicycloïdal simple (66) incluant un pignon planétaire (68) directement raccordé à la couronne dentée (62) de la première unité d'engrenages épicycloïdaux (56), un pignon (72) en prise avec le pignon planétaire (68) pour transmettre de la puissance à un engrenage différentiel (D), et une couronne dentée (74).
